# EUROPEAN PATENT SPECIFICATION

(11) **EP 3 525 013 B1**
(45) Date of publication and mention of the grant of the patent: **27.04.2022**
(21) Application number: 19020020.4
(22) Date of filing: 15.01.2019
(51) Int. Cl.: G01V 3/10

(54) **DETECTOR AND LOCALIZER OF FERROMAGNETIC INCLUSIONS IN A CONTINUALLY PASSING MEDIUM**
DETEKTOR UND LOKALISIERER VON FERROMAGNETISCHEN EINSCHLÜSSEN IN EINEM KONTINUIERLICH DURCHLAUFENDEN MEDIUM
DÉTECTEUR ET LOCALISATEUR D'INCLUSIONS FERROMAGNÉTIQUES DANS UN MILIEU À PASSAGE CONTINU

(30) Priority: 23.01.2018 CZ 20180033
(43) Date of publication of application: 14.08.2019
(73) Proprietor: Konstrukta-TireTech, 911 01 Trencin (SK); VYSOKE UCENI TECHNICKE V BRNE, 601 90 Brno (CZ)
(72) Inventor: Holcman, Vladimir, 61400 Brno (CZ); Macku, Robert, 62800 Brno (CZ); Skarvada, Pavel, 63500 Brno (CZ); Kisac, Stefan, 91108 Trencin (SK); Dugacek, Jan, 914 51 Trencianske Teplice (SK)
(74) Representative: Andera, Jiri

(56) References cited:
- JP-B2- 3 179 001
- US-A- 5 896 031
- US-A1- 2017 371 061
- US-B1- 6 218 830

## Description

### Technical field

The invention relates to a detector and localizer of ferromagnetic inclusions in a continually passing medium, comprising a primary exciting coil that the medium passes through, and further comprising at least two sensing coils.

### Prior Art

A system of line detection of metallic or non-metallic particles is known and uses electromagnetic fields to detect particles in space (in one line). Within these systems, it is important to consider sensitivity and size of the detection area. In addition, the maximum detection distance and localization accuracy needs to be defined for systems enabling localization. These parameters are closely interrelated and cannot be considered independently. Portable locators and systems for localization of metallic objects belonging to a different application field are based on a shift of the detection system to a place with a characteristic system response. Due to their own dimensions, detection parameters and the necessity to move within the detection space they are not suitable for continual detection e.g. on belt conveyors.

The European patent EP 2 433 159 discloses a system for localization of metallic objects, especially a metal detector operated in a PI mode, with multiple transmitter coils and at least one receiver coil that are mutually interconnected in an induction manner and to suppress mutual interaction they are arranged in such a way that they partly overlap each other, the point of optimum cancellation of mutual interaction being achievable. The system further comprises transducer circuitry for current supply of the transmitter coils and to assess the received signal of the receiver coil. The transmitter coils at least partly overlap the at least one receiver coil. The transmitter coils, at the same current supply, act upon this at least one receiver coil, producing a local point of optimum cancellation. During current supply of the first transmitter coil, the point of optimum cancellation moves in the first direction while during current supply of another transmitter coil, the point of optimum cancellation moves in another direction. The control connection for current control to parts of the transmitter coil leads to movement of the local point of optimum cancellation, which causes cancellation of the receiver signal.

Metal detectors for production lines generally consist of at least one exciting and at least one primary sensing and at least one secondary sensing coil. The sensing coils are wound in the opposite directions, and therefore their contribution is zeroed if there is no metallic particle inside the detection area. E.g. from the European patent EP 2 629 121 a metal detector is known comprising an enclosed space with an entry opening and exit opening, whose cross-section areas differ with respect to size. Inside the enclosed space, it further comprises a coil system adjacent to a detection zone that extends between the entry opening and the exit opening and through which checked objects can move along the movement route in such a way that they enter the metal detector through the entry opening and leave the metal detector through the exit opening. The detection zone has a cross-section profile that changes along the movement route. The coil system comprises at least one transmitter coil and at least one first and at least one second receiver coil. The coils have a different size while the at least one transmitter coil, which is powered by alternating electric current, generates a primary electromagnetic field, which in turn induces the first voltage in the at least one first receiver coil and the second voltage in the at least one second receiver coil. The at least one first receiver coil and at least one second receiver coil are situated in an unequal distance with respect to the one transmitter coil so the first and second voltage cancel each other if no metal is present in the checked items.

A belt conveyor passes through these coils, which makes such an arrangement unsuitable for localization purposes. To minimize the influence of surrounding metallic objects and interference, the entire equipment is installed in a metallic shielding chamber. In other arrangements, a coupled resonant circuit consisting of an exciting and sensing coil is used, but these arrangements are not suitable for localization purposes either (see e.g. US 8841903 B2).

JP 3 179001 B2 (NISSHIN DENSHI KOGYO KK) discloses a metal detector which is composed so as to pass a material to be detected through the opening of a search coil, and comprises a first coil made by connecting two coils having reverse winding directions and disposed in parallel with the moving direction of the material to be detected, a second coil disposed so as to surround the moving route of the material to be detected perpendicularly to the coil, and a DC magnetic field generator disposed at the opposite side to the coil through the coil to generate a magnetic flux interlinking the first and second coils in the opening of the search coil. The output voltage of the coil and the output voltage of the coil are combined at the time of moving the material to be detected to generate the signal for detecting the metal piece in the material to be detected.

US 2017/371061 A1 (ZHAO YIFEI [GB]) discloses a metal detection apparatus which has a passage channel through which products that may contain metal contaminants pass. The apparatus has at least one transmitter unit that provides transmitter signals to a transmitter coil that is inductively coupled to a first and a second receiver coil. The receiver coils are balanced and connected separately or combined to an input of a receiver unit. The transmitter coil has at least two coil sections that are arranged inclined to one another, with each coil section generating at least a first and a second magnetic field. Each of the first and the second receiver coils has at least a first coil section that is engaged in the first magnetic field and at least a second coil section that is engaged in the second magnetic field.

### Disclosure of invention

Disadvantages of the current state of technology development are eliminated by a detector and localizer of ferromagnetic inclusions in a continually passing medium according to claim 1 comprising a primary exciting coil that the medium passes through, and further comprising at least two sensing coils, the sensing coils are arranged on a plane perpendicular to the plane of the primary exciting coil. All the sensing coils are wound in any direction. At least one secondary exciting coil is arranged on the plane of the sensing coils, according to the invention the principle of which is that other sensing coils are arranged all along the perimeter of the primary exciting coil.

The detector and localizer of ferromagnetic inclusions according to the invention is capable of detecting ferromagnetic inclusions in the continually passing medium from magnetically transparent materials in a much more accurate way than known devices.

The detector according to the invention is connected to any known evaluation circuitry. According to claim 1, the sensing coils are connected to a control unit via the first amplifiers, band filters and signal processing circuits. The control unit is further connected to the primary exciting coil via the first harmonic waveform generator and the second amplifier. The control unit is also connected to the secondary exciting coil via the second harmonic waveform generator and the LF signal amplifier.

### Brief description of drawings

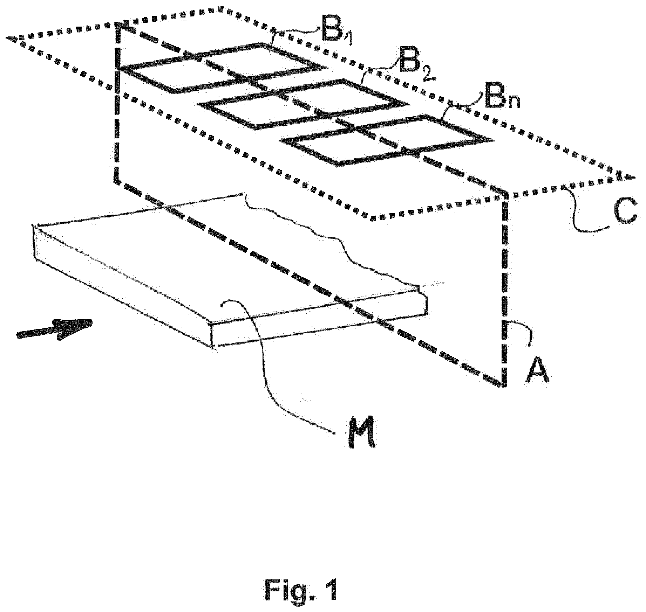

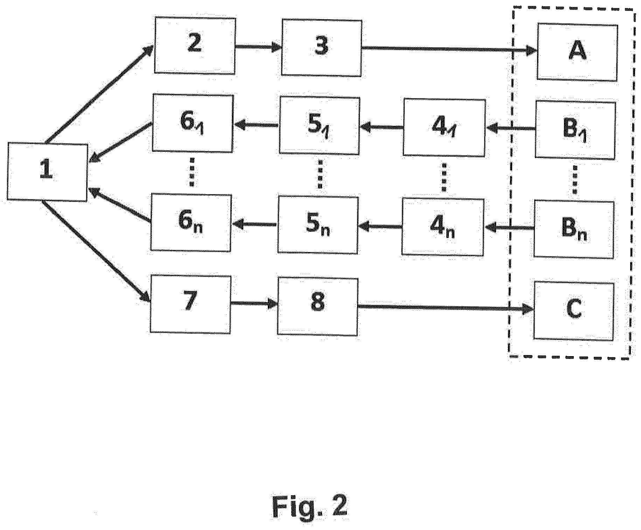

Fig. 1 shows a view of the arrangement of coils of the detector and localizer according to the invention. Fig. 2 shows a block diagram of the detector and localizer according to the invention.

### Description of preferred embodiments

The embodiment example of a detector and localizer of ferromagnetic inclusions in a continually passing medium M according to Fig. 1 and 2 comprises a primary exciting coil A that the medium M passes through and further it comprises multiple sensing coils B₁ to Bₙ that are arranged on a plane perpendicular to the plane of the primary exciting coil A. All the sensing coils B₁, Bₙ are wound in any direction. The ability to localize ferromagnetic inclusions in the continually passing medium M is proportional to the number of sensing coils B₁, Bₙ. The sensing coils B₁, Bₙ can be mechanically, or in other ways, adjusted in such a manner than their output signal can be minimized.

At least one secondary exciting coil C is arranged on the plane of the sensing coils B₁ to Bₙ that is used to produce a beat and also for calibration purposes. Information about the presence (detection) and position (localization) of a ferromagnetic particle/s can be obtained by processing of output amplitude-phase signals of the individual coils B₁ to Bₙ.

The other sensing coils are arranged all along the perimeter of the primary exciting coil A.

The primary exciting coil A is represented by a multi-row/column winding implemented with the use of a cylindrical or band conductor able to transfer electric current values in the order of single to tens of Amperes.

The sensing coils B₁ to Bₙ are sensing elements that are movable in the direction perpendicular to the exciting coil A and are implemented with the use of a geometrically regular arrangement of cylindrical or band conductors.

The secondary exciting coil C is a geometrically regular arrangement of cylindrical or band conductors.

The sensing coils B₁ to Bₙ are connected to a control, evaluation and display unit 1, hereinafter referred to as the control unit 1 for short, via first amplifiers 4₁ to 4ₙ, band filters 5₁ to 5ₙ and signal processing circuits 6₁ to 6ₙ.

The control unit 1 consists of a user interface with a computing unit, which may be a computer, microcontroller, signal processor with a display and control unit, or with a touch-sensitive screen. The user interface also provides common communication interfaces used in personal computers and industrial systems.

The first amplifiers 4₁ to 4ₙ are instrument, or differential, or signal pre-amplifiers subject to the condition of a precise low-noise design with low distortion and the input circuit tuned to the working frequency.

Each band filter 5₁ to 5ₙ may consist of an array of band filters, which may be a passive as well as active filter e.g. of the "Sallen Key" type, or a resonance circuit/array of coupled resonance circuit. A condition is a precise low-noise design and a monotonous phase characteristic in the pass region.

The signal processing circuits 6₁ to 6ₙ can be in an analogous or digital variant. They may represent a combination of software- or hardware-implemented circuits implementing: voltage references, circuits for transition to the spectral complex region, deviation amplifiers, cut-out filters of spectral components, analog-digital conversion circuits and digital signal processing, DSP, circuits and the PLC control unit, gate array, microcontroller.

Further, the control unit 1 is connected to the primary exciting coil A via a first harmonic waveform generator 2 and a second amplifier 3.

The first harmonic waveform generator 2 is an oscillator generating harmonic signal, which may be a generator producing harmonic signal, or possibly frequency synthesis with a very good spectral purity, medium-term frequency stability and good phase stability.

The second amplifier 3 is a power amplifier with low distortion and the capability of working up to low-impedance load, or an audio amplifier, or an amplifier with a current output.

The control unit 1 is also connected to the secondary exciting coil C via a second harmonic waveform generator 7 and a LF signal amplifier 8.

The second harmonic waveform generator 7 may comprise fragmentary frequency synthesis derived from the first harmonic waveform generator 2, or it may be a generator producing harmonic signal, or possibly frequency synthesis with a very good spectral purity, medium-term frequency stability and good phase stability.

The LF signal amplifier 8 comprises circuits of a powerful LF signal amplifier, e.g. discrete wiring in the "operation class A", monolithic audio amplifier, current enhanced wiring with operating amplifiers capable of current excitation of the secondary exciting coil C.

The detector and localizer of ferromagnetic inclusions according to the invention uses the principle of sensing deformations of an alternating exciting magnetic field caused by a ferromagnetic object inside the detector and conversion to phaseamplitude signal localizing a ferromagnetic inclusion.

The primary exciting coil A defines the dimension of the detection-localizing area in two directions while the localized medium M continually passes through the primary exciting coil A (see Fig. 1).

The control unit 1 will set the working frequency at the output of the precise first harmonic waveform generator 2 with pure frequency and allow its output. The harmonic signal is further amplified by the second amplifier 3 and directed to the exciting coil A. The response of the sensing coils B₁ to Bₙ is amplified by the first amplifiers 4₁ to 4ₙ and filtered by steep band filters 5₁ to 5ₙ.

The filtered signals are individually processed and simultaneously sampled by the signal processing circuits 6₁ to 6ₙ. The outputs of these signal processing circuits 6₁ to 6ₙ are routed to the control unit 1, which evaluates the signals and localizes the particle/s over the detected signals. The result and communication with the user, or possibly coupling to the superior system, is also implemented through the control unit 1, which comprises and input/output interface with a display unit.

Calibration of the system may be one-off or continuous. During a one-off calibration, the control unit 1 sets the frequency of the precise second harmonic waveform generator 7 with pure frequency to a frequency that is slightly different from the working frequency and allows the output of the second generator 7. The harmonic signal is further amplified by the LF signal amplifier 8 and directed to the secondary exciting coil C. The magnetic coupling subsequently influences the sensing coils B₁ to Bₙ, which are used for calibration in the signal processing circuits 6₁ to 6ₙ.

If necessary, continuous calibration can be used, which means that the signal of the secondary exciting coil C is present throughout the measurement time without impairing the sensitivity or other parameters of the detector, conversely ensuring adaptivity of the system to ambient conditions.

## Claims

1. A detector and localizer of ferromagnetic inclusions in a continually passing medium (M) comprising a primary exciting coil (A) that the medium (M) passes through, and further comprising at least two sensing coils (B₁ to Bₙ), the sensing coils (B₁ to Bₙ) are arranged on a plane perpendicular to the plane of the primary exciting coil (A) and all the sensing coils (B₁ to Bₙ) are wound in any direction, while at least one secondary exciting coil (C) being arranged on the plane of the sensing coils (B₁ to Bₙ), **characterized in that** other sensing coils (Bₙ) are arranged all along the perimeter of the primary exciting coil (A) and the sensing coils (B₁ to Bₙ) are connected to a control unit (1) via first amplifiers (4₁ to 4ₙ), band filters (5₁ to 5ₙ) and signal processing circuits (6₁ to 6ₙ) and the control unit (1) is connected to the first exciting coil (A) via a first harmonic waveform generator (2) and a second amplifier (3) and the control unit (1) is also connected to the secondary exciting coil (C) via a second harmonic waveform generator (7) and a LF signal amplifier (8).

## Patentansprüche

1. Detektor und Lokalisierer von ferromagnetischen Einschlüssen in einem kontinuierlich durchlaufenden Medium (M), umfassend eine primäre Erregerspule (A), durch die das Medium (M) durchströmt, und weiter umfassend mindestens zwei Aufnahmespulen (B₁ bis Bₙ), während die Aufnahmespulen (B₁ bis Bₙ) auf einer zur Ebene der primären Erregerspule (A) senkrechten Ebene angeordnet sind, und alle Aufnahmespulen (B₁ bis Bₙ) in beliebigem Sinn gewickelt sind, wobei auf der Ebene der Aufnahmespulen (B₁ bis Bₙ) mindestens eine sekundäre Erregerspule (C) angeordnet ist, **dadurch gekennzeichnet, dass** die weiteren Aufnahmespulen (Bₙ) über den ganzen Umfang der primären Erregerspule (A) angeordnet sind, und die Aufnahmespulen (B₁ bis Bₙ) über die ersten Verstärker (4₁ bis 4ₙ), Bandfilter (5₁ bis 5ₙ) und Signalverarbeitungsschaltungen (6₁ bis 6ₙ) an eine Steuereinheit (1) angeschlossen sind, und die Steuereinheit (1) über einen ersten harmonischen Generator (2) und einen zweiten Verstärker (3) an die primäre Erregerspule (A) angeschlossen ist, und die Steuereinheit (1) über den zweiten harmonischen Generator (7) und den NF-Signal-Verstärker (8) auch an die sekundäre Erregerspule (C) angeschlossen ist.

## Revendications

1. Détecteur et localisateur d'inclusions ferromagnétiques dans un médium s'écoulant en continu (M), incluant une bobine de champ primaire (A) que le médium (M) traverse et incluant en outre au moins deux bobines de lecture (B₁ à Bₙ), les bobines de lecture (B₁ à Bₙ) étant disposées dans un niveau perpendiculaire au niveau de la bobine de champ primaire (A) et toutes les bobines de lecture (B₁ à Bₙ) étant enroulées dans un sens libre, au moins une bobine de champ secondaire (C) étant disposée dans le niveau des bobines de lecture (B₁ à Bₙ), **se caractérisant par le fait que** les autres bobines de lecture (Bₙ) sont disposées sur tout le pourtour de la bobine de champ primaire (A) et les bobines de lecture (B₁ à Bₙ) sont raccordées par les premiers amplificateurs (4₁ à 4ₙ), les filtres passe-bande (5₁ à 5ₙ) et les circuits (6₁ à 6ₙ) de traitement du signal à l'unité de commande (1) et l'unité de commande (1) étant raccordée par le premier générateur (2) du déroulement harmonique et le deuxième amplificateur (3) à la bobine de champ primaire (A) et l'unité de commande (1) étant raccordée à la bobine de champ primaire (C) également par le deuxième générateur (7) du déroulement harmonique et l'amplificateur (8).
